# EUROPÄISCHE PATENTSCHRIFT

(11) **EP 0 588 760 B1**
(45) Veröffentlichungstag und Bekanntmachung des Hinweises auf die Patenterteilung: **15.05.1996**
(21) Anmeldenummer: 93810585.5
(22) Anmeldetag: 20.08.1993
(51) Int. Cl.: B60J 7/10

(54) **Muldenaufbau für eine Fahrzeug, insbesondere einen Sattelanhänger**
Skip structure for a vehicle, especially a semi-trailer
Structure d'une benne d'un véhicule notammant un semi-remorque

(30) Priorität: 11.09.1992 DE 9212174 U; 07.10.1992 DE 9213492 U
(43) Veröffentlichungstag der Anmeldung: 23.03.1994
(73) Patentinhaber: ALUSUISSE-LONZA SERVICES AG, CH-8034 Zürich (CH)
(72) Erfinder: Utz, Manfred, CH-8910 Affoltern a.A. (CH)

(56) Entgegenhaltungen:
- EP-A- 0 088 698
- CA-A- 1 212 974
- US-A- 3 971 590
- US-A- 4 049 311
- US-A- 4 302 043
- US-A- 4 923 240

## Beschreibung

Die Erfindung betrifft einen Muldenaufbau für ein Fahrzeug, insbesondere für einen Sattelanhänger, mit einem seine Wände nach oben hin begrenzenden Obergurtprofil, insbesondere in Form eines Strangpreßprofils aus Aluminium.

Derartige Obergurtprofile sind bekannt und werden unter anderem zur Auflage einer Abdeckplane mit Dachspriegeln ausgestattet.

Gemäss der US-A-4,302,043 werden ausserhalb des Grundrisses des muldenartigen Aufbaues die Vorrichtungsteile einer aufrollbaren Abdeckplane angeordnet.

Der Erfinder hat sich das Ziel gesetzt, die Funktion eines derartigen Muldenaufbaus zu verbessern durch die Schaffung eines neuen Obergurtprofils.

Zur Lösung dieser Aufgabe führt die Lehre nach dem unabhängigen Patentanspruch, die Unteransprüche geben besonders günstige Ausführungen an.

Erfindungsgemäß weist das Obergurtprofil einen von einem äußeren Wandstreifen ausgehenden und nach außen mit einer Winkelkante abkragenden Firststreifen auf, unterhalb dessen Befestigungseinrichtungen für den Randbereich der Abdeckplane vorgesehen sind, welche in Ruhelage einem Haltestab des Obergurtprofils benachbart ist.

Erfindungsgemäß werden als Befestigungseinrichtungen vom Obergurtprofil abragende Halteösen eingesetzt, auf welche Planösen der Abdeckplane aufgeschoben und durch eine eingefädelte Planenschnur gehalten werden.

Das Obergurtprofil des kippbaren oder fest installierten Muldenaufbaus ist so konzipiert, daß eine quer aufrollbare Abdeckplane zum Verschließen der nach oben weisenden Muldenöffnung die folgenden Funktionen erfüllt. Auf einer Seite des Muldenaufbaus wird die Abdeckplane über die Planösen befestigt. Außerdem werden auf der gleichen Seite der Mulde mehrere der Haltestäbe als Anschlag für den Planenwickel am Obergurtprofil festgenietet, um die Ruhelage des aus der Abdeckplane gebildeten Planenwickels zu gewährleisten. Als dritte Funktion ist anzusehen, daß auf der gegenüberliegenden Muldenseite die Plane über ein -- bevorzugt hohes -- Anschlußprofil, welches in eine Planentasche eingeschoben ist, aber auch mit der Abdeckplane fest verbunden sein kann, bei geschlossener Abdeckplane mittels einer an das Anschlußprofil angeschlossenen Kurbel gespannt wird. Wichtig ist dabei zudem, daß die gesamte Abdeckkonstruktion nicht über den Grundriß des Muldenaufbaus hinausragt.

Infolgedessen ist das Obergurtprofil mit einem sich nach unten hin öffnenden schlitzartigen Einschubraum für ein Wandelement des Muldenaufbaus versehen, und die Außenwandung des Einschubraumes bestimmt eine Konstruktionsebene als Begrenzung für die zu dieser hin weisenden Profilteile. Der Einschubraum ist vorteilhafterweise von Anschlußstegen gebildet, welche durch wenigstens einen zur vertikalen Profilachse hin geneigten Wandabschnitt mit dem in Einbaulage oberen Bereich des Obergurtprofils verbunden sind.

Als günstig hat es sich auch erwiesen, die Anschlußstege mittels eines geneigten Hohlprofilabschnittes mit der Profilkammer zu verbinden und den Querschnitt von deren Außenwand gegenüber dem äußeren Anschlußsteg zur Profilachse hin seitlich zu versetzen. Die Profilkammer mit i. w. L-förmigem Querschnitt ist geschlossen; zwischen ihr und dem Hohlprofilabschnitt verläuft eine Bodenwand, die mit dem Hohlprofilabschnitt einen Winkel bestimmt.

Nach einer weiteren erfindungsgemäßen Maßgabe ist im Obergurtprofil ein unterer Einschubraum für eine aus Hohlprofilen oder Sandwichplatten bestehende Seitenwand des Muldenaufbaus vorgesehen; die Seitenwand kann durch Kleben, Schweißen, Nieten oder durch Schrauben an das Obergurtprofil angeschlossen sein. Außerdem enthält das erfindungsgemäße Obergurtprofil eine sich ebenfalls abwärts öffnende Kammer in Form eines Kastenprofilabschnittes zur Aufnahme der Doppelrollenführung verschiebbarer Zwischenwände.

An der in Einbaulage inneren Seitenfläche des Obergurtprofils kann eine hinterschnittene Längsnut verlaufen, in welche Dachspriegel zur Auflage der Abdeckplane eingeschraubt werden. Solche Längsnuten an Fahrzeughohlprofilen sind an sich aus der EP-PS 186 625 bekannt und dienen dort zur Aufnahme von Nutensteinen für die Profilbefestigung.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: einen Querschnitt durch ein Obergurtprofil einer Lademulde mit angedeuteter Abdeckplane;
- Fig. 2:: eine Draufsicht auf einen Abschnitt der Abdeckplane;
- Fig. 3:: den gegenüber Fig. 1 verkleinerten Querschnitt mit Zusatzelementen;
- Fig. 4:: einen Querschnitt durch ein weiteres Obergurtprofil.

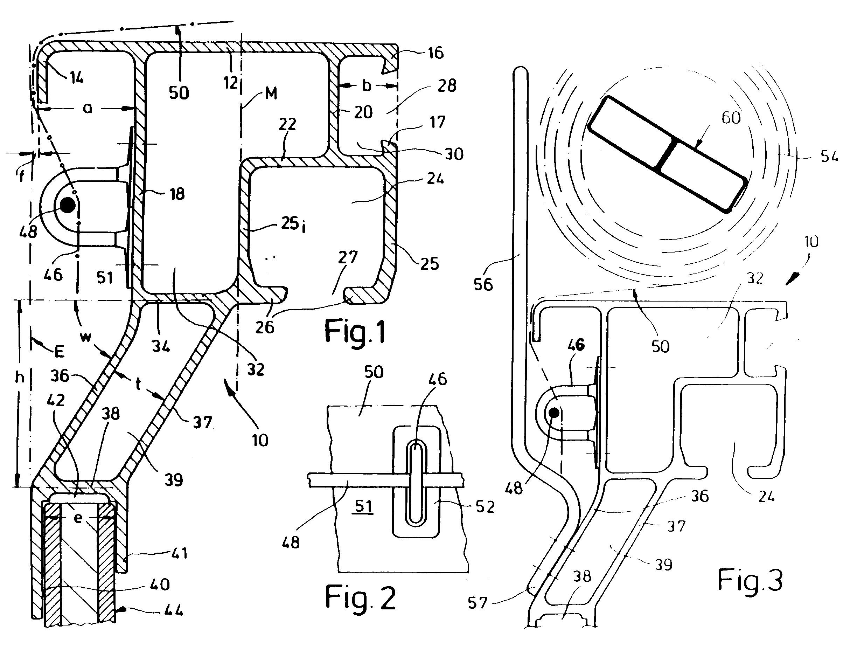

Fig. 1 zeigt ein Obergurtprofil 10 einer nicht weiter dargestellten Seitenwand der Lademulde eines Fahrzeuges, insbesondere eines Lastwagens, eines Sattelanhängers od. dgl; dieses ist aus einer Aluminiumlegierung stranggepreßt und umfaßt unterhalb eines Firststreifens 12 mit nach außen gerichteter gerundeter Winkelkante 14 und abwärts weisender hakenartiger Innenrippe 16 in Außenabstand a bzw. b zu diesen Kanten 14 bzw. 16 verlaufende vertikale Wandstreifen 18,20. Deren -- bezüglich des Fahrzeuges -- innenliegender Wandstreifen 20 ist kürzer als der andere Wandstreifen 18 und einem zum Firststreifen 12 parallelen Profilwandabschnitt 22 angeformt.

Der Profilwandabschnitt 22 ist Teil eines nach unten offenen Kastenprofils 24 mit Kastenwänden 25,25i und zwei Bodenstreifen 26 als Seitenbegrenzungen eines Bodenschlitzes 27 zur Aufnahme von Doppelrollenführungen für verschiebbare, aus Gründen der Übersichtlichkeit nicht wiedergegebene Zwischenwände innerhalb der Lademulde.

Die äußere Kastenwand 25 übergreift nach oben hin den Profilwandabschnitt 22 und bildet eine mit jener Innenrippe 16 des Firststreifens 12 fluchtende Hakenrippe 17. Diese bestimmt mit der Innenrippe 16 einen Seitenschlitz 28 als Zugriff zu einer hinterschnittenen Einsatznut 30 zum Einschieben von nicht wiedergegebenen Dachspriegeln.

Das Firstprofil 12, die Wandstreifen 18,20 und Teile des Kastenprofils 24 bilden eine Profilkammer 32, wobei diese zwischen dem längeren Wandstreifen 18 und dem Kastenprofil 24 durch eine Bodenwand 34 geschlossen wird. Diese beschreibt mit dem längeren Wandstreifen 18, dem Firststreifen 12 sowie den Außenkonturen des Kastenprofils 24 eine Rechteckkontur, innerhalb deren das rechteckige Kastenprofil 24 selbst, jene Einsatznut 30 und die querschnittlich L-artige Profilkammer 32 liegen.

Von der Bodenwand 34 geht -- in einem Winkel w nach außen hin geneigt -- ein Paar von Wandabschnitten 36,37 aus, das mit einem unteren Quersteg 38 einen schmalen Kastenraum 39 (Maß t) begrenzt. Von diesem Quersteg 38 ragen in Fig. 1 zwei Anschlußstege 40,41 ab, welche einen schlitzartigen Einschubraum 42 der Breite e von 20 bis 50 mm bestimmen. In diesen wird eine Seitenwand 44 der Lademulde eingeschoben, die aus Sandwichplatten bestehen oder aus Hohlprofilen od. dgl. zusammengesetzt sein kann. Die Seitenwand 44 wird mit dem Obergurtprofil 10 durch Kleben, Schweißen, Nieten oder Schrauben verbunden.

Der genannte Neigungswinkel w und der Abstand h zwischen Bodenwand 34 der Profilkammer 32 sowie dem Quersteg 38 -- damit also die Längen der Wandabschnitte 36,37 -- werden so gewählt, daß die Winkelkante 14 bevorzugt innerhalb der durch den äußeren Anschlußsteg 40 festgelegten, durch eine Gerade E in Fig. 1 verdeutlichte Konstruktionsebene liegt (Abstand f) oder allenfalls an dieser verläuft; die gesamte hier beschriebene Abdeckeinrichtung ragt somit nicht über ein vorgeschriebenes Lichtraummaß hinaus, beispielsweise über die Fahrzeugbreite von 2 500 mm Bei 46 ist eine U-förmige Halteöse angedeutet, welche an dem äußeren Wandstreifen 18 angeschraubt ist und zur Befestigung einer Abdeckplane 50 dient; diese deckt in nicht dargestellter Weise die obere Öffnung der Lademulde ab und wird in ihrem Anschlußbereich 51 mit aufgenieteten oder geschraubten Planösen 52 auf die horizontal abragende und vertikal gestellte Halteöse 46 aufgeschoben, wonach durch die miteinander fluchtenden Innenteile der Halteösen 46 eine Planenschnur 48 gezogen wird.

Fig. 3 verdeutlicht, daß auf der gleichen Muldenseite -- in Abhängigkeit von der Muldenlänge -- vier bis sechs Haltestäbe 56 als Anschlag für einen von der aufgerollten Abdeckplane 50 gebildeten Wickel am Obergurtprofil 10 angenietet sind. Dieser Planenwickel 54 lagert dann auf dem Firststreifen 12 neben den Haltestäben 56, die gemäß Fig. 3 in ihrem unteren Bereich nahezu S-förmig gebogen und mit einem unteren Schrägabschnitt 57 am äußeren schrägen Wandabschnitt 36 festgelegt, beispielsweise angenietet, sind.

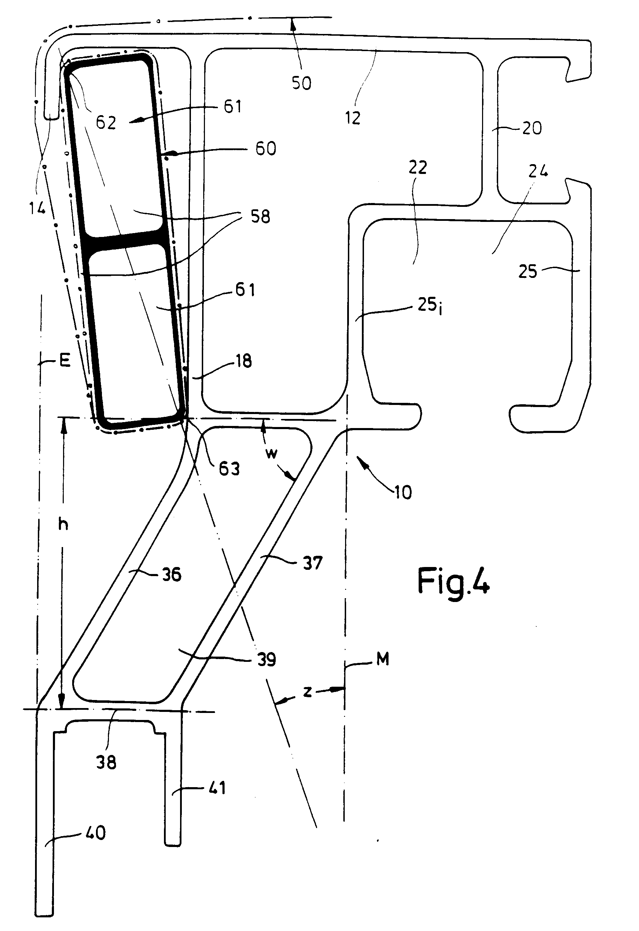

Der bei abgedeckter Mulde an deren anderen Seite verlaufende Planenrand ist als Planentasche 58 zur Aufnahme eines hohlen Anschlußprofils 60 aus zwei Kammern 61 ausgebildet. Wie Fig. 4 erkennen läßt, wird zur Befestigung des Planenrandes 51 das Anschlußprofil 60 in seiner Planentasche 58 hinter die Winkelkante 14 geschoben, so daß eine Profilecke 62 des Anschlußprofils 60 der Winkelkante 14 innenseitig anliegt und die diagonal gegenüberliegende Profilecke 63 dem äußeren Wandstreifen 18, d. h. die durch beide Profilecken 62,63 gelegte Diagonale D trifft auf die entlang der inneren Kastenwand 25i verlaufenden Profilmittelachse M in einem spitzen Winkel z.

Nicht gezeigt ist eine Handkurbel, die mit dem Anschlußprofil 60 verbunden ist, die Abdeckplane 50 in abdeckender Schließstellung spannt sowie das Aufrollen der Abdeckplane quer zur Fahrtrichtung erlaubt.

## Patentansprüche

1. Muldenaufbau für ein Fahrzeug, insbesondere einen Sattelanhänger, mit einem seine Wände nach oben hin begrenzenden Obergurtprofil, insbesondere einem Strangpreßprofil,
dadurch gekennzeichnet,
daß das Obergurtprofil (10) einen von einem äußeren Wandstreifen (18) ausgehenden und nach außen mit einer Winkelkante (14) abkragenden Firststreifen (12) aufweist, unterhalb dessen Befestigungseinrichtungen (46) für den Randbereich einer Abdeckplane (50) vorgesehen sind, wobei die Abdeckplane (50) in Ruhelage einen Planenwickel (54) bildet, der aufragenden Haltestäben (56) des Obergurtprofils benachbart ist und die Haltestäbe (56) an einem äusseren schrägen Wandabschnitt (36) des Obergurtprofils unterhalb der Befestigungseinrichtung (46) festgelegt sind, so dass die Abdeckeinrichtung nicht über den Grundriss des Muldenaufbaues hinausragt.

2. Muldenaufbau nach Anspruch 1, dadurch kennzeichnet, daß die Befestigungseinrichtung vom Obergurtprofil (10) abragende Halteösen (46) sind, auf welche Planösen (52) der Abdeckplane (50) aufschiebbar sind.

3. Muldenaufbau nach Anspruch 1 oder 2, dadurch gekennzeichnet, daß das Obergurtprofil (10) mit einem sich nach unten hin öffnenden schlitzartigen Einschubraum (42) für ein Wandelement (44) des Muldenaufbaus versehen ist.

4. Muldenaufbau nach Anspruch 3, dadurch gekennzeichnet, daß die Außenwandung (Anschlußsteg 40) des Einschubraumes (42) eine Konstruktionsebene (E) als Begrenzung für die zu dieser hin weisenden Profilteile (14,46) bestimmt.

5. Muldenaufbau nach einem der Ansprüche 1 bis 4, dadurch gekennzeichnet, daß der Einschubraum (42) von Anschlußstegen (40,41) gebildet ist, welche durch wenigstens einen zur vertikalen Profilachse (M) hin geneigten Wandabschnitt (36,37) mit dem in Einbaulage oberen Bereich des Obergurtprofils (10) verbunden sind.

6. Muldenaufbau nach einem der Ansprüche 1 bis 5, dadurch gekennzeichnet, daß die Anschlußstege (40,41) mittels eines geneigten Hohlprofilabschnittes (Kastenraum 39) mit der Profilkammer (32) verbunden sind und der Querschnitt von deren Außenwand (Wandstreifen 18) gegenüber dem äußeren Anschlußsteg (40) zur vertikalen Profilachse (M) hin seitlich versetzt ist.

7. Muldenaufbau nach einem der Ansprüche 1 bis 6, dadurch gekennzeichnet, daß die Profilkammer (32) geschlossen sowie zwischen ihr und dem Hohlprofilabschnitt (39) eine Bodenwand (34) verläuft, die mit dem Hohlprofilabschnitt einen Winkel (w) bestimmt.

8. Muldenaufbau nach wenigstens einem der Ansprüche 1 oder 7, gekennzeichnet durch ein einseitig offenes Kastenprofil (24) des Obergurtprofils (10) zur Aufnahme von Doppelrollenführungen verschiebbarer Zwischenwände.

9. Muldenaufbau nach wenigstens einem der Ansprüche 1 bis 8, dadurch gekennzeichnet, daß an den Firststreifen (12) sowohl eine Profilkammer (32) als auch eine sich in Einbaulage zur Profilinnenseite hin öffnende hinterschnittene Nut (28) benachbart sind, welch letztere zur Aufnahme von Dachspriegeln dient.

10. Muldenaufbau nach Anspruch 9, gekennzeichnet durch einen L-förmigen Querschnitt der Profilkammer (32).

11. Muldenaufbau nach wenigstens einem der Ansprüche 1 bis 10, dadurch gekennzeichnet, daß die Winkelkante (14) des Firststreifens (12) ein Widerlager für ein Anschlußprofil (60) bildet, welches in eine Randtasche (58) der Abdeckplane (59) eingefügt ist.

12. Muldenaufbau nach wenigstens einem der Ansprüche 1 bis 11, dadurch gekennzeichnet, daß das Anschlußprofil (60) zwischen der Winkelkante (14) des Firststreifens (12) einerseits und dem äußeren Wandstreifen (18) verspannt festgelegt ist, wobei eine durch die obere äußere Ecke (62) und die innere untere Ecke (63) des Anschlußprofilquerschnitts gelegte Diagonale (D) in einem spitzen Winkel (z) auf eine in Einbaulage vertikale Profilmittelachse (M) trifft.

## Claims

1. Skip structure for a vehicle, especially a semi-trailer, comprising a top boom section, especially an extruded section, delimiting its walls towards the top, characterised in that the top boom section (10) has a rider strip (12) departing from an outer wall strip (18) and bent towards the outside via a bevelled edge (14), and below which securing means (46) are provided for the edge region of a tarpaulin (50), the tarpaulin (50) in the rest position forming a roll (54) which is adjacent to stay bars (56) projecting from the top boom section, and the stay bars (56) being fixed to an outer oblique wall portion (36) of the top boom section below the securing means (46) so that the covering means does not project beyond the plan of the skip structure.

2. Skip structure according to claim 1, characterised in that the securing means are holding eyes (46) projecting from the top boom section (10), on to which eyes (52) on the tarpaulin (50) can be slipped.

3. Skip structure according to claim 1 or claim 2, characterised in that the top boom section (10) is provided with a slot-shaped space (42) opening towards the bottom for a wall element (44) of the skip structure.

4. Skip structure according to claim 3, characterised in that the outer wall (connecting web 40) of the space (42) defines a design plane (E) to delimit the sectional parts (14, 46) directed towards it.

5. Skip structure according to one of claims 1 to 4, characterised in that the space (42) is formed by connecting webs (40, 41) which are connected to the upper region of the top boom section (10) in the final position by means of at least one wall portion (36, 37) inclined towards the vertical axis (M) of the section.

6. Skip structure according to one of claims 1 to 5, characterised in that the connecting webs (40, 41) are connected to the section chamber (32) by means of an inclined hollow section portion (box-shaped space 39) and the cross section of its outer wall (wall strip 18) is offset laterally from the vertical axis (M) of the section relative to the outer connecting web (40).

7. Skip structure according to one of claims 1 to 6, characterised in that the section chamber (32) is closed and that a bottom wall (34) extends between it and the hollow section portion (39), said bottom wall including an angle (w) with the hollow section portion.

8. Skip structure according to at least one of claims 1 or 7, characterised by a box-shaped section (24) of the top boom section (10) open at one end in order to receive double roller guides of displaceable intermediate walls.

9. Skip structure according to at least one of claims 1 to 8, characterised in that both a section chamber (32) and an undercut groove (28) opening towards the inner face of the section in the final position are adjacent to the rider strip (12), said groove serving to receive roof bows.

10. Skip structure according to claim 9, characterised by an L-shaped cross section for the section chamber (32).

11. Skip structure according to at least one of claims 1 to 10, characterised in that the bevelled edge (14) of the rider strip (12) forms an abutment for a connecting section (60) which is inserted into an edge pocket (58) in the tarpaulin (59).

12. Skip structure according to at least one of claims 1 to 11, characterised in that the connecting section (60) is braced between the bevelled edge (14) of the rider strip (12), on the one hand, and the outer wall strip (18), a diagonal (D) through the upper outer corner (62) and the inner lower corner (63) of the connecting section cross section meeting a vertical centre axis (M) of the section in the final position at an acute angle (z).

## Revendications

1. Superstructure de benne pour un véhicule, en particulier pour un semi-remorque, comportant un profilé de membrure supérieure délimitant ses parois vers le haut, en particulier en forme d'un profilé extrudé en aluminium,
caractérisée en ce que :
le profilé de membrure supérieure (10) présente une bande de sommet (12) partant d'une bande de paroi extérieure (18) et en porte-à-faux vers l'extérieur avec une arête angulaire (14), dans lequel sont prévus au-dessous de ladite bande de sommet des dispositifs de fixation (46) pour la région de bordure de la bâche de recouvrement (50), la bâche de recouvrement (50) formant, dans la position de repos, un enroulement de bâche (54) qui avoisine des barres de retenue (56) dépassant vers le haut du profilé de membrure supérieure, et les barres de retenue (56) étant fixées sur un tronçon de paroi oblique extérieur (36) du profilé de membrure supérieure au-dessous du dispositif de fixation (46), de sorte que le dispositif de recouvrement ne dépasse pas au-delà du contour de la superstructure de benne.

2. Superstructure de benne selon la revendication 1, caractérisée en ce que le dispositif de fixation est représenté par des oeillets de retenue (46) dépassant du profilé de membrure supérieure (10), sur lesquels peuvent être poussés des oeillets de bâche (52) de la bâche de recouvrement (50).

3. Superstructure de benne selon l'une ou l'autre des revendications 1 et 2, caractérisée en ce que le profilé de membrure supérieure (10) est pourvu d'une chambre d'introduction (42) en forme de fente qui s'ouvre vers le bas, pour un élément de paroi (44) de la superstructure de benne.

4. Superstructure de benne selon la revendication 3, caractérisée en ce que la paroi extérieure (barrette de raccordement 40) de la chambre d'introduction (42) détermine un plan de construction (E) en tant que délimitation pour les pièces de profilé (14, 46) dirigées vers celui-ci.

5. Superstructure de benne selon l'une quelconque des revendications 1 à 4, caractérisée en ce que la chambre d'introduction (42) est formée par des barrettes de raccordement (40, 41) qui sont reliées par au moins un tronçon de paroi (36, 37) incliné vers l'axe vertical (M) du profilé, à la région supérieure en position de montage du profilé de membrure supérieure (10).

6. Superstructure de benne selon l'une quelconque des revendications 1 à 5, caractérisée en ce que les barrettes de raccordement (40, 41) sont reliées à la chambre de profilé (32) au moyen de tronçons de profilé creux appropriés (chambre en caisson 39), et en ce que la section transversale de sa paroi extérieure (bande de paroi 18) est décalée latéralement vers l'axe vertical (M) du profité par rapport à la barrette de raccordement extérieure (40).

7. Superstructure de benne selon l'une quelconque des revendications 1 à 6, caractérisée en ce que la chambre de profilé (32) est fermée, et en ce qu'entre celle-ci et le tronçon de profité creux (39) s'étend une paroi de fond (34) qui détermine un angle (w) conjointement avec le tronçon de profité creux.

8. Superstructure de benne selon l'une ou l'autre au moins des revendications 1 et 7, caractérisée par un profilé en caisson (24), ouvert sur un côté, du profilé de membrure supérieure (10) pour la réception de guidages à double galets de parois intermédiaires mobiles.

9. Superstructure de benne selon l'une quelconque au moins des revendications 1 à 8, caractérisée en ce qu'il est prévu au voisinage de la bande de sommet (12) à la fois une chambre de profilé (32) et une gorge (28) en contre-dépouille qui s'ouvre en position de montage vers le côté intérieur du profilé, ladite gorge servant à la réception de cerceaux de toiture.

10. Superstructure de benne selon la revendication 9, caractérisée en ce que la chambre de profilé (32) présente une section transversale en forme de L.

11. Superstructure de benne selon l'une quelconque au moins des revendications 1 à 10, caractérisée en ce que l'arête angulaire (14) de la bande de sommet (12) forme un contre-palier pour un profilé de raccordement (60) qui est introduit dans une poche de bordure (58) de la bâche de recouvrement (50).

12. Superstructure de benne selon l'une quelconque au moins des revendications 1 à 11, caractérisée en ce que le profilé de raccordement (60) est fixé de façon précontrainte d'une part entre l'arête angulaire (14) de la bande de sommet (12) et la bande de paroi extérieure (18), une ligne diagonale (D) passant à travers le coin supérieur extérieur (62) et le coin inférieur intérieur (63) de la section transversale du profilé de raccordement rencontrant sous un angle aigu (z) l'axe central (M) du profilé, qui est vertical en position de montage.
